# EUROPÄISCHE PATENTSCHRIFT

(11) **EP 4 164 931 B1**
(45) Veröffentlichungstag und Bekanntmachung des Hinweises auf die Patenterteilung: **18.06.2025**
(21) Anmeldenummer: 21730809.7
(22) Anmeldetag: 27.05.2021
(51) Int. Cl.: F16H 61/02, B60W 10/10, B60W 30/19, B60W 60/00

(54) **TRAJEKTORIEPLANUNG FÜR EIN AUTOMATISIERTES KRAFTFAHRZEUG**
TRAJECTORY PLANNING FOR AN AUTOMATED MOTOR VEHICLE
PLANIFICATION DE TRAJECTOIRE POUR UN VÉHICULE À MOTEUR AUTOMATISÉ

(30) Priorität: 12.06.2020 DE 102020115599
(43) Veröffentlichungstag der Anmeldung: 19.04.2023
(73) Patentinhaber: MAN Truck & Bus SE, 80995 München (DE); VOLKSWAGEN AKTIENGESELLSCHAFT, 38440 Wolfsburg (DE)
(72) Erfinder: WULF, Leonie, 80995 München (DE); GROSSJOHANN, Simon, 38442 Wolfsburg (DE); MEINECKE, Marc-Michael, 38524 Sassenburg (DE); HILDEBRANDT, Arne-Christoph, 80995 München (DE)
(74) Vertreter: v. Bezold & Partner Patentanwälte - PartG mbB
(86) Internationale Anmeldenummer: PCT/EP2021/064186
(87) Internationale Veröffentlichungsnummer: WO 2021/249783

(56) Entgegenhaltungen:
- EP-A1- 3 285 129
- DE-A1- 102018 114 419
- GB-A- 2 526 357
- US-A1- 2019 129 439
- US-A1- 2019 283 771

## Beschreibung

### Beschreibung

Die Erfindung betrifft ein Verfahren zum Betreiben eines automatisierten Kraftfahrzeugs, vorzugsweise Nutzfahrzeugs, und ein automatisiertes Kraftfahrzeug, vorzugsweise Nutzfahrzeug.

Heutige Systeme des automatischen Fahrens arbeiten u. a. mit speziellen Algorithmen für die Bahnplanung des Fahrzeugs. Dabei basieren die Bahnplanungsalgorithmen häufig auf Umfeldinformationen. Die Aufgabe des Bahnplanungsalgorithmus ist es, unter den Gegebenheiten eine Bewegungstrajektorie für das eigene Fahrzeug für die nähere Zukunft zu berechnen. Die berechnete Trajektorie kann über einen Fahrzeugregler an die Aktuatoren (Gas, Bremse, Lenkung usw.) und ggf. weitere Signalempfänger (z. B. Fahrtrichtungsanzeiger) weitergeleitet werden.

Die DE 10 2017 124 954 B3 offenbart eine Verfahren zum Betrieb eines selbstfahrenden Kraftfahrzeugs. Es wird allgemein offenbart, dass zur Ermittlung einer Geschwindigkeitstrajektorie u.a. die gewählte Gangstufe und etwaige Gangwechsel berechnet werden.

Die GB 2 526 357 A offenbart ein Verfahren zur automatischen Steuerung der Geschwindigkeit eines Fahrzeugs in Übereinstimmung mit einem Zielgeschwindigkeitswert. Das Verfahren umfasst dabei ein automatisches Veranlassen des Fahrzeugs, mit einem Soll-Geschwindigkeitswert zu fahren, zumindest teilweise durch Steuern eines Drehmoments, das von einem Antriebsstrang auf ein oder mehrere Räder eines Fahrzeugs aufgebracht wird. Ferner umfasst das Verfahren ein automatisches Veranlassen einer Änderung des Soll-Geschwindigkeitswertes gemäß einem vorbestimmten Geschwindigkeitsprofil, um dadurch eine entsprechende Änderung einer gemessenen aktuellen Geschwindigkeit eines Fahrzeugs zu bewirken. Weiterhin weist das Verfahren ein automatisches Bestimmen auf, wann eine Antriebsstrang-Drehmomentunterbrechung auftritt, wobei das Verfahren im Wesentlichen ein vorübergehendes Veranlassen einer Aussetzung von Änderungen des Soll-Geschwindigkeitswertes gemäß dem vorbestimmten Geschwindigkeitsprofil umfasst, wenn bestimmt wird, dass eine Antriebsstrang-Drehmomentunterbrechung auftritt.

Aus der EP 3 285 129 A1 ist eine Technik zur Längsführung eines Nutzfahrzeugs in einem Fahrzeugverband hintereinanderfahrender Fahrzeuge bekannt. Ein Verfahrensaspekt der Technik umfasst den Schritt des Bestimmens von Parametern eines zukünftigen Intervallbetriebs der Längsführung des Nutzfahrzeugs in Kommunikation mit einem im Fahrzeugverband vorausfahrenden und/oder nachfahrenden, ebenfalls in einem Intervallbetrieb angetriebenen Fahrzeug; und den Schritt des Längsführens des Nutzfahrzeugs im Intervallbetrieb auf Grundlage der bestimmten Parameter des Nutzfahrzeugs.

Die US 2019/283771 A1 offenbart eine automatisierte Fahrsteuerung, die einen Aktionsplan für ein Fahrzeug festlegt. Bei der Fahrsteuerung kann zwischen einem normalen Fahrmodus und einem Eilfahrmodus, der in einem Fall verwendet wird, in dem ein Fahrer im Vergleich zum normalen Fahrmodus in Eile ist, gewählt werden. Der Eilfahrmodus ist ein Modus, in dem es möglich ist, ein Ziel früher als im normalen Fahrmodus zu erreichen. In einem automatisierten Fahrmodus wird das Fahrzeug ferner automatisch gesteuert. Das Fahrzeug ist mit einer Informationserfassungseinheit versehen, die den Zustand erfasst, in dem der Fahrer in Eile ist, und Informationen an die automatisierte Fahrsteuerung liefert, und die automatisierte Fahrsteuerung wählt den Eilfahrmodus, wenn die Informationserfassungseinheit den Zustand erfasst, in dem der Fahrer in Eile ist.

Aus der US 2019/129439 A1 ist ferner ein Fahrzeugsteuergerät mit einer elektrischen Steuereinheit bekannt, wobei die Steuereinheit einen Mikroprozessor und einen mit dem Mikroprozessor verbundenen Speicher enthält. Der Mikroprozessor ist so konfiguriert, dass er einen Aktionsplan des selbstfahrenden Fahrzeugs erzeugt und eine Antriebsenergiequelle und ein Getriebe so steuert, dass ein selbstfahrendes Fahrzeug durch Selbstfahren in Übereinstimmung mit dem Aktionsplan fährt. Der Aktionsplan umfasst eine Zielfahrzeuggeschwindigkeit nach kontinuierlicher Erhöhung oder Verringerung über eine Einheitszeit und eine Zielzeit von einem gegenwärtigen Zeitpunkt bis zu einem Zeitpunkt, an dem die Zielfahrzeuggeschwindigkeit erreicht ist. Ferner ist der Mikroprozessor so konfiguriert, dass er die Antriebsenergiequelle und das Getriebe so steuert, dass das selbstfahrende Fahrzeug mit einer Zielfahrzeugbeschleunigung fährt, die auf der Grundlage der Zielzeit und eines Fahrzeuggeschwindigkeitsänderungsbetrags von der Fahrzeuggeschwindigkeit zum gegenwärtigen Zeitpunkt zur Zielfahrzeuggeschwindigkeit eingestellt ist.

Der Erfindung liegt die Aufgabe zu Grunde, eine alternative und/oder verbesserte Technik zum automatisierten Betreiben eines Kraftfahrzeugs zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Verfahren zum Betreiben eines automatisierten (z. B. teilautomatisiertes, bedingungsautomatisiertes, hochautomatisiertes oder vollautomatisiertes) Kraftfahrzeugs, vorzugsweise (z. B. schweres) Nutzfahrzeugs (z. B. Lastkraftwagens oder Omnibusses). Das Verfahren weist ein Planen (z. B. Berechnen) einer Trajektorie des Kraftfahrzeugs in Abhängigkeit von einer Gangschaltzeit eines Getriebes (z. B. Automatikgetriebe, Schaltautomat usw.) des Kraftfahrzeugs (z. B. mittels eines Trajektorieplaners des Kraftfahrzeugs) auf, wobei die Gangschaltzeit die Zeit ist, die das Getriebe benötigt, um von einem Ausgangsgang eines Schaltvorgangs zu einem Zielgang des Schaltvorgangs zu schalten. Das Verfahren weist ein Betreiben (z. B. Fahren) des Kraftfahrzeugs in Abhängigkeit von der geplanten Trajektorie (z. B. mittels einer Steuereinheit des Kraftfahrzeugs) auf (z. B. Abfahren der geplanten Trajektorie mit dem Kraftfahrzeug).

Vorzugsweise kann das Verfahren bei der automatischen Fahrt z. B. in einem schweren Nutzfahrzeug eine deutlich "ruhigere" Trajektorie ergeben. Würde die Gangschaltzeit nicht berücksichtigt werden, könnten Trajektorien geplant werden, die mit stetig steigenden Geschwindigkeitsverläufen quasi unterbrechungsfreie Gangwechsel erfordern. Derartige Längsbeschleunigungsanforderungen können jedoch vom Antriebsstrang ggf. nicht umsetzbar sein, da es z. B. konstruktionsbedingt beim Schalten des Getriebes zu einer Zugkraftunterbrechung beim Antreiben des Kraftfahrzeugs kommen kann. Nennenswerte Schaltzeiten, die in der Trajektorie nicht berücksichtigt wurden, können in der Folge beim Abfahren der geplanten Trajektorie zu einem sehr unkomfortablen, verbrauchsintensiven und riskanten Fahrverhalten führen. Wird beispielsweise bei einer langsamen Fahrt aufwärts am Hang ein Gang gewechselt, kann es sein, dass während der Gangwechselphase das Fahrzeug zum Stillstand kommt oder sogar zum Rückwärtsrollen beginnt. Wird die Gangschaltzeit hingegen berücksichtigt, können solche Situationen vermieden werden. Zusätzlich kann die "ruhigere Trajektorie" vorteilhaft zu einem geringeren Kraftstoffverbrauch, geringeren Verschleiß an mechanischen Teilen und einer geringeren Beanspruchung von Ladegut und Ladungssicherungseinrichtungen führen.

Zweckmäßig kann das Verfahren automatisiert bzw. automatisch durchgeführt werden.

Vorzugsweise kann das Getriebe als ein Automatikgetriebe, ein halbautomatisches Getriebe (z. B. mit automatischem Auskuppeln und Einkuppeln beim Gangwechsel), ein Getriebe mit Wandlerschaltkupplung, ein Schaltautomat oder Ähnliches ausgeführt sein.

Bevorzugt kann die Gangschaltzeit die Zeit sein, die das Getriebe benötigt, um von einem Ausgangsgang eines Schaltvorgangs zu einem Zielgang des Schaltvorgangs zu schalten. Die Zeit kann bspw. starten, wenn die Anforderung zum Gangwechsel erfolgt, wenn begonnen wird, den Ausgangsgang auszukuppeln, oder wenn der Ausgangsgang ausgekuppelt ist. Die Zeit kann bspw. enden, wenn der Zielgang eingekuppelt bzw. eingelegt wurde.

In einem Ausführungsbeispiel ist die Gangschaltzeit ein Durchschnittswert zum Schalten zwischen zwei, vorzugsweise beliebigen, Gängen des Getriebes. Damit kann das Verfahren steuerungstechnisch vergleichsweise einfach umgesetzt werden.

In einem weiteren Ausführungsbeispiel ist die Gangschaltzeit zwischen 1 s und 3 s oder mehr, und/oder ist die Gangschaltzeit ein vorbestimmter Wert.

In einem weiteren Ausführungsbeispiel ist die Gangschaltzeit abhängig von einem Ausgangsgang eines Schaltvorgangs des Getriebes und/oder einem Zielgang eines Schaltvorgangs des Getriebes. Damit kann das Verfahren steuerungstechnisch vergleichsweise genau umgesetzt werden, da ggf. unterschiedliche Schaltvorgänge unterschiedlich viel Zeit benötigen.

Es ist möglich, dass die Gangschaltzeit(en) bspw. in einem Trajektorieplaner des Kraftfahrzeugs gespeichert ist.

In einer Ausführungsform ist das Getriebe nicht-lastschaltbar ausgeführt, und/oder beim Schalten des Getriebes tritt eine Zugkraftunterbrechung oder eine Zugkraftverringerung beim Antreiben des Kraftfahrzeugs auf.

In einer weiteren Ausführungsform wird die Trajektorie derart in Abhängigkeit von der Gangschaltzeit geplant, dass während eines (geplanten) Schaltens des Getriebes die Trajektorie (z. B. zumindest abschnittsweise) schubfrei, schubverringert (z. B. im Vergleich zu einem direkt angrenzenden Abschnitt der Trajektorie davor und/oder danach), abgeflacht (z. B. im Vergleich zu einem direkt angrenzenden Abschnitt der Trajektorie davor und/oder danach), ohne Geschwindigkeitsveränderung und/oder mit verringerter Geschwindigkeitsänderung (z. B. im Vergleich zu einem direkt angrenzenden Abschnitt der Trajektorie davor und/oder danach) geplant ist. So kann die eingangs beschriebene "ruhigere" Trajektorie erreicht werden.

In einer weiteren Ausführungsform wird die Trajektorie des Kraftfahrzeugs derart in Abhängigkeit von der Gangschaltzeit geplant, dass es aufgrund der Schaltzeit zu keiner Unterschreitung einer Mindestgeschwindigkeit des Kraftfahrzeugs kommt, zu keinem Stillstand des Kraftfahrzeugs kommt und/oder zu keinem Rückwärtsrollen des Kraftfahrzeugs kommt. Damit können im Stand der Technik auftretende Probleme umgangen werden.

In einer Ausführungsvariante erfolgt das Planen der Trajektorie zusätzlich in Abhängigkeit von einer vorbestimmten Schaltstrategie des Getriebes. Damit kann eine Funktionsweise des Getriebes aufweisend dessen Schaltlogik und dessen Gangschaltzeit(en) beim Planen der Trajektorie berücksichtigt werden und die geplante Trajektorie entsprechend beeinflussen.

Zweckmäßig kann die vorbestimmte Schaltstrategie des Getriebes in einem Trajektorieplaner des Kraftfahrzeugs gespeichert sein.

In einer weiteren Ausführungsvariante erfolgt das Planen der Trajektorie zusätzlich in Abhängigkeit von einem (z. B. erfassten und/oder empfangenen und/oder gespeicherten) Höhenprofil eines dem Kraftfahrzeug vorausliegenden Streckenabschnitts. Insbesondere bei sich veränderndem Höhenprofil können nämlich Schaltvorgänge notwendig werden, die somit beim Planen der Trajektorie antizipiert werden können.

In einer Weiterbildung wird die Trajektorie des Kraftfahrzeugs derart geplant, dass die Trajektorie aus unterschiedlichen Trajektorieanwärtern, die unterschiedliche Gangschaltungen des Getriebes entlang des Höhenprofils aufweisen, ausgewählt wird, vorzugsweise in Abhängigkeit von einem minimalen Kraftstoffverbrauch bei Sicherstellung, dass es zu keiner Unterschreitung einer Mindestgeschwindigkeit des Kraftfahrzeugs kommt, zu keinem Stillstand des Kraftfahrzeugs kommt und/oder zu keinem Rückwärtsrollen des Kraftfahrzeugs kommt.

In einem Ausführungsbeispiel erfolgt das Planen der Trajektorie zusätzlich in Abhängigkeit von (z. B. erfassten und/oder empfangenen und/oder gespeicherten) statischen Umfeldinformationen (z. B. Fahrbahngeometrie, Verkehrszeichen, Verkehrsregeln) des Kraftfahrzeugs, und/oder (z. B. erfassten und/oder empfangenen) dynamischen Umfeldinformationen (z. B. andere Verkehrsteilnehmer wie Fahrzeuge, Fußgänger) des Kraftfahrzeugs.

In einer Weiterbildung wird basierend auf den statischen Umfeldinformationen eine Belegungskarte erstellt und/oder aktualisiert, in der ein Umfeld des Kraftfahrzeugs in befahrbare und in nicht-befahrbare Zellen unterteilt ist. Vorzugsweise kann basierend auf der Belegungskarte, den dynamischen Umfeldinformationen und der Gangschaltzeit die Trajektorie berechnet werden (z. B. unter Berücksichtigung einer Kollisionsfreiheit und/oder eines geringen Kraftstoffverbrauchs).

Beispielsweise kann die Trajektorie zusätzlich in Abhängigkeit von einer geplanten Route des Kraftfahrzeugs geplant werden.

In einer Ausführungsform weist die Trajektorie eine Längsbewegung und/oder eine (z. B. positive oder negative) Längsbeschleunigung des Kraftfahrzeugs auf, und/oder die Trajektorie weist eine Querbewegung und/oder eine (z. B. positive oder negative) Querbeschleunigung des Kraftfahrzeugs auf.

In einer weiteren Ausführungsform wird die Trajektorie für einen vorausliegenden Streckenabschnitt einer geplanten Route des Kraftfahrzeugs geplant, und/oder die Trajektorie weist eine Geschwindigkeitstrajektorie und/oder eine Bewegungstrajektorie auf.

In einer weiteren Ausführungsform weist das Betreiben des Kraftfahrzeugs in Abhängigkeit von der geplanten Trajektorie ein Betätigen mindestens eines Aktors, vorzugsweise eines Getriebeschaltaktors des Getriebes, eines Beschleunigungsaktors, eines Bremsaktors und/oder eines Lenkaktors, in Abhängigkeit von der geplanten Trajektorie auf.

In einer Ausführungsvariante wird das Planen der Trajektorie von einem Trajektorieplaner des Kraftfahrzeugs ausgeführt.

In einer Weiterbildung betreibt (z. B. betätigt und/oder steuert) der Trajektorieplaner zusätzlich das Getriebe des Kraftfahrzeugs direkt und/oder ein Gangwechselbefehl für das Getriebe wird direkt von dem Trajektorieplaner erzeugt und zugeführt (z. B. zu einem Getriebeaktor zum Schalten des Getriebes). Somit kann sich die Getriebesteuerung bspw. vom Getriebesteuergerät zu dem Trajektorieplaner verlagern, wobei hierdurch vorteilhaft eine vollkommen optimierte Planung hinsichtlich Hindernissen, bewegten Objekten, Höhenprofilgegebenheiten, Gangschaltvorgängen und Kraftstoffverbrauch berechnet werden kann und diese dann abgefahren werden kann.

Ein weiterer Aspekt der vorliegenden Offenbarung betrifft ein automatisiertes (z. B. teilautomatisiertes, bedingungsautomatisiertes, hochautomatisiertes oder vollautomatisiertes) Kraftfahrzeug, vorzugsweise (z. B. schweres) Nutzfahrzeug (z. B. Lastkraftwagen oder Omnibus). Das Kraftfahrzeug kann auch als Personenkraftwagen ausgeführt sein.

Das Kraftfahrzeug weist einen Trajektorieplaner auf, der dazu ausgebildet ist, eine Trajektorie des Kraftfahrzeugs in Abhängigkeit von einer Gangschaltzeit eines Getriebes des Kraftfahrzeugs zu planen, wobei die Gangschaltzeit die Zeit ist, die das Getriebe benötigt, um von einem Ausgangsgang eines Schaltvorgangs zu einem Zielgang des Schaltvorgangs zu schalten. Das Kraftfahrzeug weist eine Steuereinheit auf, die dazu ausgebildet ist, das Kraftfahrzeug in Abhängigkeit von der geplanten Trajektorie des Trajektorieplaners zu betreiben.

Vorzugsweise kann sich der Begriff "Steuereinheit" auf eine Elektronik (z. B. mit Mikroprozessor(en) und Datenspeicher) und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Bevorzugt kann der Trajektorieplaner eine Elektronik (z. B. mit Mikroprozessor(en) und Datenspeicher) aufweisen. Der Trajektorieplaner kann einen Bahnplanungsalgorithmus ausführen, der basierend auf unterschiedlichen Eingangswerten (z. B. Gangschaltzeit) eine Trajektorie plant (z. B. berechnet).

In einer Weiterbildung ist der Trajektorieplaner und/oder die Steuereinheit dazu ausgebildet, ein Verfahren wie hierin offenbart auszuführen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine rein schematische Ansicht eines beispielhaften Kraftfahrzeugs; und
- Figur 2: ein Geschwindigkeits-Weg-Diagramm mit zwei beispielhaften Trajektorien.

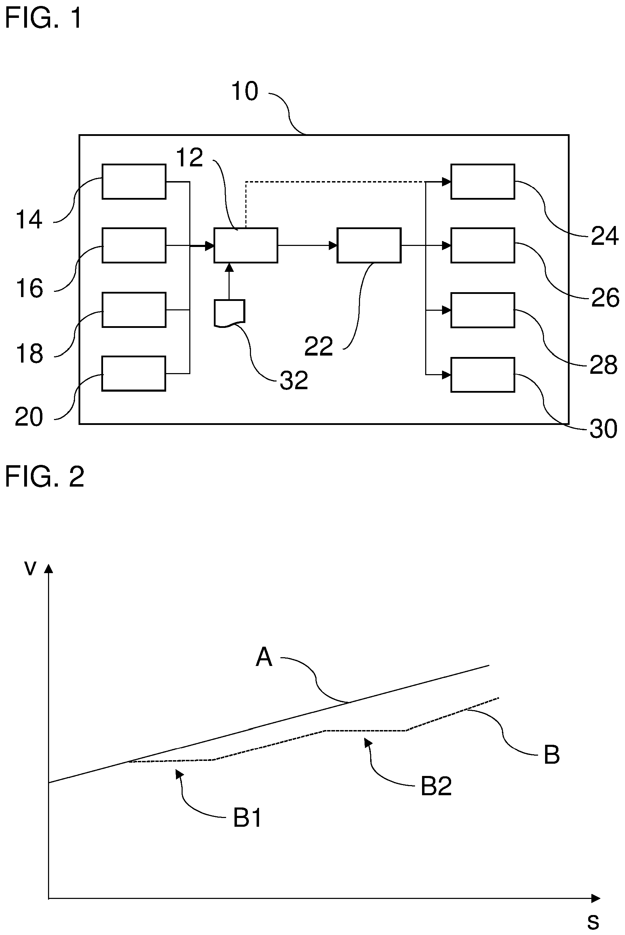

Figur 1 zeigt rein schematisch ein Kraftfahrzeug 10. Das Kraftfahrzeug 10 ist als ein automatisiertes Kraftfahrzeug ausgeführt. Der Automatisierungsgrad kann bspw. teilautomatisiert (z. B. Stufe 2 nach SAE J3016), bedingungsautomatisiert (z. B. Stufe 3 nach SAE J3016) hochautomatisiert (z. B. Stufe 4 nach SAE J3016) oder vollautomatisiert/vollautonom (z. B. Stufe 5 nach SAE J3016) sein. Bevorzugt ist das Kraftfahrzeug ein Nutzfahrzeug, z. B. ein Lastkraftwagen oder ein Omnibus.

Zum automatisierten Betreiben kann das Kraftfahrzeug 10 einen Trajektorieplaner 12 aufweisen. Der Trajektorieplaner 12 kann basierend auf Informationen von unterschiedlichen Einrichtungen 14-20 eine Trajektorie für das Kraftfahrzeug 10 planen. Anhand der geplanten Trajektorie kann das Kraftfahrzeug 10 von einer Steuereinheit 22 durch Betätigung unterschiedlicher Aktoren 24-30 und/oder Ansteuerung von Steuergeräten unterschiedlicher Aktoren 24-30 automatisiert betrieben werden. Die Trajektorie kann eine Geschwindigkeitstrajektorie und/oder eine Bewegungstrajektorie aufweisen.

Das Kraftfahrzeug 10 kann als Informationsquellen für den Trajektorieplaner 12 beispielsweise eine Umgebungserfassungssensorik 14, eine Kommunikationsschnittstelle 16, eine Benutzerschnittstelle 18 und/oder ein Navigationssystem 20 aufweisen.

Die Umgebungserfassungssensorik 14 ist dazu ausgebildet, eine Umgebung bzw. ein Umfeld des Kraftfahrzeugs 10 zu erfassen. Die Umgebungserfassungssensorik 14 kann beispielsweise mindestens eine Radarvorrichtung, mindestens eine Lidarvorrichtung, mindestens eine Kameravorrichtung, mindestens eine Abstandssensorvorrichtung, mindestens einen Außentemperatursensor usw. aufweisen.

Die Kommunikationsschnittstelle 16 ist dazu ausgebildet, elektronische Informationen vorzugsweise drahtlos, z. B. über Funk oder Internetverbindung, zu empfangen. Die Informationen können bspw. von jeglicher Einrichtung stammen (engl. V2X: vehicle-toeverything), z. B. von einem anderen Fahrzeug, einer Leitstelle, einer Person, einer Infrastruktureinrichtung und/oder einer Straße.

Über die Benutzerschnittstelle 18 kann eine manuelle Benutzereingabe erfolgen. Mittels Benutzereingabe kann bspw. eine gewünschte Optimierungsstrategie für den Trajektorieplaner 12 vorgegeben werden, z. B. kürzeste Fahrzeit oder geringster Kraftstoffverbrauch. Benutzereingaben können bspw. auch Einstellungen oder Vorgaben bzgl. der Umgebungserfassungssensorik 14, der Kommunikationsschnittstelle 16 und des Navigationssystem 20 sein. Je nach Ausführung der Benutzerschnittstelle 18 kann die Benutzereingabe mittels Sprachsteuerung, mittels Gestik und/oder händisch erfolgen.

Das Navigationssystem 20 ist dazu ausgebildet, das Kraftfahrzeug 10 entlang einer vorgebbaren Route zu navigieren. Das Navigationssystem 20 kann zum Navigieren des Kraftfahrzeugs 10 auch Informationen von der Umgebungserfassungssensorik 14, der Kommunikationsschnittstelle 16 und/oder der Benutzerschnittstelle 18 empfangen. Zum Beispiel kann eine Zielvorgabe für die Route bspw. mittels der Benutzerschnittstelle 18 oder der Kommunikationsschnittstelle 16 erfolgen.

Der Trajektorieplaner 12 kann eine Trajektorie des Kraftfahrzeugs 10 vorzugsweise wie folgt planen.

Der Trajektorieplaner 12 kann von der Umgebungserfassungssensorik 14 Informationen bezüglich der Umgebung des Kraftfahrzeugs 10 empfangen. Die Informationen können statische Umfeldinformationen, z. B. Fahrbahngeometrie, Verkehrszeichen, Verkehrsregeln usw., und dynamische Umfeldinformationen, z. B. andere Verkehrsteilnehmer wie Fahrzeuge, Fußgänger usw., aufweisen. Der Trajektorieplaner 12 erstellt oder aktualisiert eine Belegungskarte bzw. ein Belegungsnetz ("occupancy grid") basierend auf den empfangenen statischen Umfeldinformationen für das Umfeld des Kraftfahrzeugs 10. Die Belegungskarte ist in eine Vielzahl von Zellen aufgeteilt. Die Zellen können bspw. jeweils eine Größe von 20 cm x 20 cm aufweisen. Zu jeder Zelle wird in Abhängigkeit von den statischen Umfeldinformationen ermittelt, ob die Zelle entweder frei bzw. befahrbar ist oder ob die Zelle belegt bzw. nicht-befahrbar ist.

Der Trajektorieplaner 12 kann die Belegungskarte als Eingangsinformation für den Bahnplanungsalgorithmus nutzen. Ausgehend von den einzelnen Belegungszuständen der Zellen (befahrbar - ja/nein?) und den erfassten dynamische Umfeldinformationen (z. B. Bewegungszustände anderer Verkehrsteilnehmer) kann der Trajektorieplaner 12 eine Trajektorie durch das Szenario berechnen. Als Randbedingungen für die Trajektorieberechnung können beispielsweise die Kollisionsfreiheit und die Durchführbarkeit mit geringem Kraftstoffverbrauch vorgegeben sein. Eine Ausgabe des Bahnplanungsalgorithmus des Trajektorieplaners 12 kann eine geplante Trajektorie sein. Die Trajektorie kann bspw. eine Längsbewegung, eine (z. B. positive oder negative) Längsbeschleunigung, eine Querbewegung (z. B. Lenkwinkelvorgabe) und/oder eine (z. B. positive oder negative) Querbeschleunigung des Kraftfahrzeugs 10 aufweisen.

Der Trajektorieplaner 12 kann die geplante Trajektorie zu der Steuereinheit 22 übertragen. Die Steuereinheit 22 kann die Aktoren 24-30 entsprechend der geplanten Trajektorie betreiben. Die Steuereinheit 22 kann eine zentrale Steuereinheit des Kraftfahrzeugs und/oder einen oder mehrere dezentrale Steuereinheiten der Aktoren 24-30 aufweisen.

Beispielsweise kann anhand der geplanten Trajektorie ein (Schalt-)Getriebe 24 des Kraftfahrzeugs 10 geschaltet, ein Beschleunigungsaktor 26 des Kraftfahrzeugs 10 betätigt, ein Bremsaktor 28 des Kraftfahrzeugs 10 betätigt und/oder ein Lenkaktor 30 des Kraftfahrzeugs 10 betätigt werden. Die Aktoren 24-30 können jeweils so betätigt werden, dass das Kraftfahrzeug 10 möglichst genau der geplanten Trajektorie folgt.

Eine Besonderheit des Trajektorieplaners 12, insbesondere des Bahnplanungsalgorithmus des Trajektorieplaners 12, besteht darin, dass die geplante Trajektorie (auch) in Abhängigkeit von einer Gangschaltzeit 32 des Getriebes 24 geplant wird. Diese Besonderheit ist nachfolgend unter Bezugnahme auf die Figuren 1 und 2 erläutert. Die Figur 2 zeigt rein exemplarisch zwei stark vereinfachte Kurven A und B (Geschwindigkeit als Funktion des Weges), die eine geplante Geschwindigkeitskomponente unterschiedlicher Trajektorien darstellen.

Es ist nämlich möglich, dass beim Gangwechsel des Getriebes 24 eine Zugkraftunterbrechung oder zumindest eine Zugkraftverringerung beim Antreiben des Kraftfahrzeugs 10 auftritt. Das Kraftfahrzeug 10 kann somit während des Schaltvorgangs des Getriebes 24 schubfrei oder zumindest schubgemindert sein. Das Getriebe 24 ist beispielsweise ein Automatikgetriebe oder ein Schaltautomat. Das Getriebe 24 ist zweckmäßig nicht-lastschaltbar (nichtvolllastschaltbar) ausgeführt. Das Getriebe 24 kann von einer Verbrennungskraftmaschine und/oder einem Elektromotor des Kraftfahrzeugs 10 angetrieben sein.

Würde man hingegen die Gangschaltzeit des Getriebes 24 nicht berücksichtigen, würde der Bahnplanungsalgorithmus des Trajektorieplaners 12 annehmen, dass eine Längsbeschleunigungsanforderungen (Beschleunigen oder Verzögern) direkt von der Aktuatorik des Kraftfahrzeugs 10 umsetzbar ist. Konkret kann dies bedeuten, dass Beschleunigungen beliebig von der Fahrgeschwindigkeit angefordert und umgesetzt werden können. Das kann in der Tat der Fall sein, wenn beispielsweise ein volllastschaltbares Doppelkupplungsgetriebe (DSG) in dem Kraftfahrzeug 10 vorhanden wäre, bei dem quasi zugkraftunterbrechungsfrei Gangwechsel erfolgen können. In der geplanten Trajektorie könnte eine Fahrgeschwindigkeit somit streng monoton steigend angesteuert werden. Dies ist in Kurve A der Figur 2 beispielhaft dargestellt.

Diese Kurve A ist jedoch für das bspw. nicht-lastschaltbare Getriebe 24 nicht umsetzbar, wodurch es zu Situationen kommt, in denen aufgrund der Zugkraftunterbrechung oder Zugkraftverminderung beim Gangwechsel im Anschluss an den Gangwechsel vergleichsweise stark nachgeregelt werden muss, um die geplante (Soll-) Geschwindigkeit gemäß der Kurve A zu erreichen. In der Praxis kann sich daraus beispielsweise ein unruhiges Beschleunigungsverhalten, ein erhöhter Kraftstoffverbrauch und ein erhöhter Verschleiß der Aktuatorik ergeben.

Insbesondere bei schweren Nutzfahrzeugen, wie Lastkraftwagen, können die nennenswerten Schaltzeiten zu sehr unkomfortablen und verbrauchsintensiven Fahrverhalten führen. Es ist sogar möglich, dass gemäß der geplanten Trajektorie bei einer langsamen Fahrt bergaufwärts ein Gang des Getriebes gewechselt wird, wobei das Kraftfahrzeug während der Gangwechselphase zum Stillstand kommt oder sogar zum Rückwärtsrollen beginnt. Dies führt zu massiven Problemen im praktischen Einsatz. Die Fahrergebnisse in den beschriebenen und ähnlichen Szenarien sind für schwere Nutzfahrzeuge inakzeptabel.

Durch die Berücksichtigung der Gangschaltzeit 32 des Getriebes 24 bei der Planung der Trajektorie kann bspw. ein geplanter Geschwindigkeitsverlauf gemäß der Kurve B in Figur 2 erhalten werden. Die Kurve B weist zwei zumindest abgeflachte Abschnitte B1 und B2 auf, an denen eine Gangschaltung des Getriebes 24 durchgeführt wird bzw. werden soll. Durch die Berücksichtigung der Gangschaltzeit 32 des Getriebes 24 kann die Trajektorie somit derart geplant werden, dass während eines Schaltens des Getriebes 24 die Trajektorie z. B. schubfrei oder schubgemindert geplant ist.

Mit dieser Technik wird der automatisierten Fahrt in dem Kraftfahrzeug, insbesondere einem schweren Nutzfahrzeug, eine deutlich "ruhigere" Trajektorie angefordert. Es sind weniger erheblich Eingriffe beim Nachregeln erforderlich. Die "ruhigere" Trajektorie kann bspw. einen geringeren Kraftstoffverbrauch, einen geringerer Verschleiß an mechanischen Teilen und eine geringere Beanspruchung von Ladegut und Ladungssicherungseinrichtungen wegen glatterer Trajektorien begünstigen. Die geplante Trajektorie kann ferner derart geplant sein, dass es aufgrund der Schaltzeit des Getriebes 24 zu keiner Unterschreitung einer Mindestgeschwindigkeit des Kraftfahrzeugs 10 kommt, zu keinem Stillstand des Kraftfahrzeugs 10 kommt und/oder zu keinem Rückwärtsrollen des Kraftfahrzeugs 10 kommt.

Beispielsweise kann die Gangschaltzeit 32 in dem Trajektorieplaner 12 gespeichert sein. Bevorzugt ist die vorgegebene Gangschaltzeit 32 ein Durchschnittswert zum Schalten zwischen zwei, vorzugsweise beliebigen, Gängen des Getriebes 24. Die Gangschaltzeit 32 kann in Abhängigkeit von dem Getriebe 24 bspw. zwischen 1 s und 3 s sein. Bevorzugt ist die Gangschaltzeit ein vorbestimmter Wert, der bspw. nicht erst während des Betriebs des Kraftfahrzeugs 10 zu ermitteln ist. Es ist auch möglich, dass Gangschaltungen des Getriebes 24 z. B. aufgrund der Konstruktion des Getriebes 24 unterschiedliche lange dauern, z. B. 1.Gang zu 2.Gang länger als 2.Gang zu 3.Gang. Die vom Trajektorieplaner 12 berücksichtigte Gangschaltzeit 32 kann bspw. auch abhängig von einem Ausgangsgang und/oder einem Zielgang des Gangwechsels sein.

Bevorzugt plant der Trajektorieplaner 12 die Trajektorie zusätzlich in Abhängigkeit von einer vorbestimmten Schaltstrategie des Getriebes 24. Die Schaltstrategie kann angeben, bei welchen Systemzuständen ein Gangwechsel eingeleitet wird. Durch die Berücksichtigung der Schaltstrategie kann ein Beschleunigungsvermögen des Kraftfahrzeugs 10 besser abgebildet werden, da dieses abhängig von den Systemzuständen des Getriebes 24 sein kann (insbesondere der Fahrgeschwindigkeit und/oder Momentenanforderung und/oder Gang eingelegt oder nicht eingelegt).

Optional kann der Trajektorieplaner 12 ein Höhenprofil eines dem Kraftfahrzeug 10 vorausliegenden Streckenabschnitts berücksichtigen. Das Höhenprofil kann bspw. mittels des Navigationssystems 20 und/oder mittels Kartendaten bereitgestellt werden. Der Trajektorieplaner 12 kann die Trajektorie des Kraftfahrzeugs 10 so planen, dass Steigungen problemlos vom Kraftfahrzeug 10 durchfahren werden können und dort bspw. Gangwechsel vermieden werden, wenn sich die Schaltzeit zu negativ auswirken würde.

Beispielsweise kann der Trajektorieplaner 12 die Trajektorie des Kraftfahrzeugs 10 derart planen, dass die geplante Trajektorie aus unterschiedlichen Trajektorieanwärtern, die unterschiedliche Getriebeschaltungen mit der jeweiligen Getriebeschaltzeit entlang des Höhenprofils aufweisen, ausgewählt wird. Bei der Planung der Trajektorieanwärter und/oder der Auswahl der Trajektorie kann vorzugsweise ein minimaler Kraftstoffverbrauch des Kraftfahrzeugs 10 bei Sicherstellung, dass es zu keiner Unterschreitung einer Mindestgeschwindigkeit des Kraftfahrzeugs 10 kommt, zu keinem Stillstand des Kraftfahrzeugs 10 kommt und/oder zu keinem Rückwärtsrollen des Kraftfahrzeugs 10 kommt, berücksichtigt werden.

Es ist auch möglich, dass der Trajektorieplaner 12 so ausgeführt ist, dass er das Getriebe 24 direkt ansteuern kann (siehe gestrichelter Pfeil in Figur 1). Der Gangwechselbefehl kann also direkt vom Trajektorieplaner 12 generiert und an das Getriebe 24 gesendet werden. Somit kann die Getriebesteuerung vom Getriebesteuergerät des Getriebes 24 zu dem Trajektorieplaner 12 verlagert werden. Die Gangschaltvorgänge können von dem Trajektorieplaner 12 optimiert geplant und direkt durchgeführt werden. Zudem kann so sichergestellt werden, dass die geplante Trajektorie auch möglichst genau in der Praxis umgesetzt wird und nicht etwa durch bspw. kleinere Regelabweichungen das Getriebesteuergerät eine ungeplante Gangschaltung vornimmt oder eine geplante Gangschaltung nicht vornimmt.

### Bezugszeichenliste

- 10: Kraftfahrzeug
- 12: Trajektorieplaner
- 14: Umgebungserfassungssensorik
- 16: Kommunikationsschnittstelle
- 18: Benutzerschnittstelle
- 20: Navigationssystem
- 22: Steuereinheit
- 24: Getriebe
- 26: Beschleunigungsaktor
- 28: Bremsaktor
- 30: Lenkaktor
- 32: Gangschaltzeit
- A, B: Geschwindigkeitskurven (z. B. Geschwindigkeitstrajektorie)

## Patentansprüche

1. Verfahren zum Betreiben eines automatisierten Kraftfahrzeugs (10), vorzugsweise Nutzfahrzeugs, **gekennzeichnet durch**:
Planen einer Trajektorie des Kraftfahrzeugs (10) in Abhängigkeit von einer Gangschaltzeit (32) eines Getriebes (24) des Kraftfahrzeugs (10), wobei die Gangschaltzeit die Zeit ist, die das Getriebe (24) benötigt, um von einem Ausgangsgang eines Schaltvorgangs zu einem Zielgang des Schaltvorgangs zu schalten; und
Betreiben des Kraftfahrzeugs (10) in Abhängigkeit von der geplanten Trajektorie.

2. Verfahren nach Anspruch 1, wobei:
die Gangschaltzeit (32) ein Durchschnittswert zum Schalten zwischen zwei, vorzugsweise beliebigen, Gängen des Getriebes (24) ist; und/oder
die Gangschaltzeit (32) zwischen 1 s und 3 s oder mehr ist; und/oder
die Gangschaltzeit (32) ein vorbestimmter Wert; und/oder
die Gangschaltzeit (32) abhängig von einem Ausgangsgang eines Schaltvorgangs des Getriebes (24) und/oder einem Zielgang eines Schaltvorgangs des Getriebes (24) ist.

3. Verfahren nach Anspruch 1 oder Anspruch 2, wobei:
das Getriebe (24) nicht-lastschaltbar ausgeführt ist; und/oder
beim Schalten des Getriebes (24) eine Zugkraftunterbrechung oder eine Zugkraftverringerung beim Antreiben des Kraftfahrzeugs (10) auftritt.

4. Verfahren nach einem der vorherigen Ansprüche, wobei:
die Trajektorie derart in Abhängigkeit von der Gangschaltzeit (32) geplant wird, dass während eines Schaltens des Getriebes (24) die Trajektorie schubfrei, schubverringert, abgeflacht, ohne Geschwindigkeitsveränderung oder mit verringerter Geschwindigkeitsänderung geplant ist.

5. Verfahren nach einem der vorherigen Ansprüche, wobei:
die Trajektorie des Kraftfahrzeugs (10) derart in Abhängigkeit von der Gangschaltzeit (32) geplant wird, dass es aufgrund der Schaltzeit zu keiner Unterschreitung einer Mindestgeschwindigkeit des Kraftfahrzeugs (10) kommt, zu keinem Stillstand des Kraftfahrzeugs (10) kommt und/oder zu keinem Rückwärtsrollen des Kraftfahrzeugs (10) kommt.

6. Verfahren nach einem der vorherigen Ansprüche, wobei:
das Planen der Trajektorie zusätzlich in Abhängigkeit von einer vorbestimmten Schaltstrategie des Getriebes (24) erfolgt.

7. Verfahren nach einem der vorherigen Ansprüche, wobei:
das Planen der Trajektorie zusätzlich in Abhängigkeit von einem Höhenprofil eines dem Kraftfahrzeug (10) vorausliegenden Streckenabschnitts erfolgt.

8. Verfahren nach Anspruch 7, wobei:
die Trajektorie des Kraftfahrzeugs (10) derart geplant wird, dass die Trajektorie aus unterschiedlichen Trajektorieanwärtern, die unterschiedliche Gangschaltungen des Getriebes (24) entlang des Höhenprofils aufweisen, ausgewählt wird, vorzugsweise in Abhängigkeit von einem minimalen Kraftstoffverbrauch bei Sicherstellung, dass es zu keiner Unterschreitung einer Mindestgeschwindigkeit des Kraftfahrzeugs (10) kommt, zu keinem Stillstand des Kraftfahrzeugs (10) kommt und/oder zu keinem Rückwärtsrollen des Kraftfahrzeugs (10) kommt.

9. Verfahren nach einem der vorherigen Ansprüche, wobei:
das Planen der Trajektorie zusätzlich in Abhängigkeit von statischen Umfeldinformationen des Kraftfahrzeugs und dynamischen Umfeldinformationen des Kraftfahrzeugs erfolgt.

10. Verfahren nach Anspruch 9, wobei:
basierend auf den statischen Umfeldinformationen eine Belegungskarte erstellt und/oder aktualisiert wird, in der ein Umfeld des Kraftfahrzeugs (10) in befahrbare Zellen und in nicht-befahrbare Zellen unterteilt ist; und
basierend auf der Belegungskarte, den dynamischen Umfeldinformationen und der Gangschaltzeit (32) die Trajektorie berechnet wird.

11. Verfahren nach einem der vorherigen Ansprüche, wobei:
die Trajektorie eine Längsbewegung und/oder eine Längsbeschleunigung des Kraftfahrzeugs (10) aufweist; und/oder
die Trajektorie eine Querbewegung und/oder eine Querbeschleunigung des Kraftfahrzeugs (10) aufweist; und/oder
die Trajektorie für einen vorausliegenden Streckenabschnitt einer geplanten Route des Kraftfahrzeugs (10) geplant wird; und/oder
die Trajektorie eine Geschwindigkeitstrajektorie und/oder eine Bewegungstrajektorie aufweist.

12. Verfahren nach einem der vorherigen Ansprüche, wobei:
das Betreiben des Kraftfahrzeugs (10) in Abhängigkeit von der geplanten Trajektorie ein Betätigen mindestens eines Aktors, vorzugsweise eines Getriebeschaltaktors des Getriebes (24), eines Beschleunigungsaktors, eines Bremsaktors und/oder eines Lenkaktors, in Abhängigkeit von der geplanten Trajektorie aufweist.

13. Verfahren nach einem der vorherigen Ansprüche, wobei:
das Planen der Trajektorie von einem Trajektorieplaner (12) des Kraftfahrzeugs (10) ausgeführt wird und der Trajektorieplaner (12) zusätzlich das Getriebe des Kraftfahrzeugs (10) direkt betreibt und/oder ein Gangwechselbefehl für das Getriebe (24) direkt von dem Trajektorieplaner (12) erzeugt und zugeführt wird.

14. Automatisiertes Kraftfahrzeug (10), vorzugsweise Nutzfahrzeug, **gekennzeichnet durch**:
einen Trajektorieplaner (12), der dazu ausgebildet ist, eine Trajektorie des Kraftfahrzeugs (10) in Abhängigkeit von einer Gangschaltzeit (32) eines Getriebes (24) des Kraftfahrzeugs (10) zu planen; wobei die Gangschaltzeit die Zeit ist, die das Getriebe benötigt, um von einem Ausgangsgang eines Schaltvorgangs zu einem Zielgang des Schaltvorgangs zu schalten; und
eine Steuereinheit (22), die dazu ausgebildet ist, das Kraftfahrzeug (10) in Abhängigkeit von der geplanten Trajektorie des Trajektorieplaners (12) zu betreiben.

15. Automatisiertes Kraftfahrzeug (10) nach Anspruch 14, wobei:
der Trajektorieplaner (12) und/oder die Steuereinheit (22) dazu ausgebildet ist, ein Verfahren nach einem der Ansprüche 1 bis 13 auszuführen.

## Claims

1. A method for operating an automated motor vehicle (10), preferably a commercial vehicle,
**characterized by**
planning a trajectory of the motor vehicle (10) depending on a gear shift time (32) of a transmission (24) of the motor vehicle (10), the gear shift time being the time required by the transmission (24) to shift from an initial gear of a shift operation to a target gear of the shift operation; and
operating the motor vehicle (10) depending on the planned trajectory.

2. The method according to claim 1, wherein:
the gear shift time (32) is an average value for shifting between two, preferably arbitrary, gears of the transmission (24); and/or
the gear shift time (32) is between 1 s and 3 s or more; and/or
the gear shift time (32) is a predetermined value; and/or
the gear shift time (32) is dependent on an initial gear of a shifting operation of the transmission (24) and/or a target gear of a shifting operation of the transmission (24).

3. The method according to claim 1 or claim 2, wherein:
the transmission (24) is configured to be non-power-shiftable; and/or
when shifting the transmission (24), an interruption in tractive force or a reduction in tractive force occurs during the propulsion of the motor vehicle (10).

4. The method according to any one of the preceding claims, wherein:
the trajectory is planned depending on the gear shift time (32) such that, during a gear shift of the transmission (24), the trajectory is planned without thrust, with reduced thrust, flattened, without speed change, or with reduced speed change.

5. The method according to any one of the preceding claims, wherein:
the trajectory of the motor vehicle (10) is planned depending on the gear shift time (32) such that the gear shift time does not cause the motor vehicle (10) to fall below a minimum speed, does not cause the motor vehicle (10) to come to a standstill, and/or does not cause the motor vehicle (10) to roll backwards.

6. The method according to any one of the preceding claims, wherein:
the planning of the trajectory further depends on a predetermined shift strategy of the transmission (24).

7. The method according to any one of the preceding claims, wherein:
the planning of the trajectory further depends on an elevation profile of a section of a route ahead of the motor vehicle (10).

8. The method according to claim 7, wherein:
the trajectory of the motor vehicle (10) is planned such that the trajectory is selected from different trajectory candidates having different gear shifts of the transmission (24) along the elevation profile, preferably depending on a minimum fuel consumption while ensuring that there is no undershooting of a minimum speed of the motor vehicle (10), no standstill of the motor vehicle (10), and/or no reverse rolling of the motor vehicle (10).

9. The method according to any one of the preceding claims, wherein:
the planning of the trajectory further depends on static surrounding information of the motor vehicle and dynamic surrounding information of the motor vehicle.

10. The method according to claim 9, wherein:
based on the static surrounding information, an occupancy map is created and/or updated, in which a surrounding of the motor vehicle (10) is divided into drivable cells and non-drivable cells; and
the trajectory is calculated based on the occupancy map, the dynamic surrounding information, and the gear shift time (32).

11. The method according to any one of the preceding claims, wherein:
the trajectory comprises a longitudinal movement and/or a longitudinal acceleration of the motor vehicle (10); and/or
the trajectory comprises a lateral movement and/or a lateral acceleration of the motor vehicle (10); and/or
the trajectory is planned for a preceding section of a planned route of the motor vehicle (10); and/or
the trajectory comprises a speed trajectory and/or a movement trajectory.

12. The method according to any one of the preceding claims, wherein:
the operating the motor vehicle (10) depending on the planned trajectory comprises an actuation of at least one actuator, preferably a transmission shift actuator of the transmission (24), an acceleration actuator, a braking actuator, and/or a steering actuator, depending on the planned trajectory.

13. The method according to any one of the preceding claims, wherein:
the planning of the trajectory is carried out by a trajectory planner (12) of the motor vehicle (10), and the trajectory planner (12) further operates the transmission of the motor vehicle (10) directly, and/or a gear shift command for the transmission (24) is generated and supplied directly by the trajectory planner (12).

14. An automated motor vehicle (10), preferably a commercial vehicle, **characterized by**:
a trajectory planner (12), configured to plan a trajectory of the motor vehicle (10) depending on a gear shift time (32) of a transmission (24) of the motor vehicle (10), the gear shift time being the time required by the transmission (24) to shift from an initial gear of a shift operation to a target gear of the shift operation; and
a control unit (22) which is configured to operate the motor vehicle (10) depending on the planned trajectory of the trajectory planner (12).

15. The automated motor vehicle (10) according to claim 14, wherein:
the trajectory planner (12) and/or the control unit (22) is configured to perform a method according to any one of claims 1 to 13.

## Revendications

1. Procédé pour faire fonctionner un véhicule automobile automatisé (10), de préférence un véhicule utilitaire, **caractérisé par** :
la planification d'une trajectoire du véhicule automobile (10) en fonction d'un temps de changement de rapport (32) d'une transmission (24) du véhicule automobile (10), le temps de changement de rapport étant le temps nécessaire à la transmission (24) pour passer d'un rapport initial d'une opération de changement de rapport à un rapport cible de l'opération de changement de rapport ; et
le fait de faire fonctionner le véhicule automobile (10) en fonction de la trajectoire planifiée.

2. Procédé selon la revendication 1, où :
le temps de changement de rapport (32) est une valeur moyenne pour passer entre deux rapports, de préférence quelconques, de la transmission (24) ; et/ou
le temps de changement de rapport (32) est compris entre 1 s et 3 s ou plus ; et/ou
le temps de changement de rapport (32) est une valeur prédéterminée ; et/ou
le temps de changement de rapport (32) dépend d'un rapport initial d'une opération de changement de rapport de la transmission (24) et/ou d'un rapport cible d'une opération de changement de rapport de la transmission (24).

3. Procédé selon la revendication 1 ou la revendication 2, où :
la transmission (24) est conçue pour ne pas être commutée sous charge ; et/ou
lors du changement de rapport de la transmission (24), une interruption de la force de traction ou une diminution de la force de traction se produit lors de la propulsion du véhicule automobile (10).

4. Procédé selon l'une quelconque des revendications précédentes, où :
la trajectoire est planifiée en fonction du temps de changement de rapport (32) de telle sorte que, pendant un changement de rapport de la transmission (24), la trajectoire est planifiée sans poussée, avec une poussée réduite, aplatie, sans modification de vitesse ou avec une modification de vitesse réduite.

5. Procédé selon l'une quelconque des revendications précédentes, où :
la trajectoire du véhicule automobile (10) est planifiée en fonction du temps de changement de rapport (32) de telle sorte qu'en raison du temps de changement de rapport, il n'y a pas de sous-dépassement d'une vitesse minimale du véhicule automobile (10), il n'y a pas d'arrêt du véhicule automobile (10) et/ou il n'y a pas de recul du véhicule automobile (10).

6. Procédé selon l'une quelconque des revendications précédentes, où :
la planification de la trajectoire s'effectue en outre en fonction d'une stratégie de changement de rapport prédéterminée de la transmission (24).

7. Procédé selon l'une quelconque des revendications précédentes, où :
la planification de la trajectoire s'effectue en outre en fonction d'un profil de hauteur d'une section de route précédant le véhicule automobile (10).

8. Procédé selon la revendication 7, où :
la trajectoire du véhicule automobile (10) est planifiée de telle sorte que la trajectoire est sélectionnée parmi différents candidats de trajectoire qui présentent différents rapports de la transmission (24) le long du profil de hauteur, de préférence en fonction d'une consommation minimale de carburant tout en s'assurant qu'il n'y a pas de sous-dépassement d'une vitesse minimale du véhicule automobile (10), qu'il n'y a pas d'arrêt du véhicule automobile (10) et/ou qu'il n'y a pas de recul du véhicule automobile (10).

9. Procédé selon l'une quelconque des revendications précédentes, où :
la planification de la trajectoire s'effectue en outre en fonction d'informations d'environnement statiques du véhicule automobile et d'informations d'environnement dynamiques du véhicule automobile.

10. Procédé selon la revendication 9, où :
sur la base des informations d'environnement statiques, une carte d'occupation est créée et/ou mise à jour, dans laquelle un environnement du véhicule automobile (10) est divisé en cellules praticables et en cellules non praticables ; et
la trajectoire est calculée sur la base de la carte d'occupation, des informations d'environnement dynamique et du temps de changement de rapport (32).

11. Procédé selon l'une quelconque des revendications précédentes, où :
la trajectoire présente un mouvement longitudinal et/ou une accélération longitudinale du véhicule automobile (10) ; et/ou
la trajectoire présente un mouvement transversal et/ou une accélération transversale du véhicule automobile (10) ; et/ou
la trajectoire est planifiée pour une section de route précédente d'un itinéraire planifié du véhicule automobile (10) ; et/ou
la trajectoire présente une trajectoire de vitesse et/ou une trajectoire de mouvement.

12. Procédé selon l'une quelconque des revendications précédentes, où :
le fonctionnement du véhicule automobile (10) en fonction de la trajectoire planifiée présente un actionnement d'au moins un actionneur, de préférence un actionneur de changement de rapport de la transmission (24), un actionneur d'accélération, un actionneur de freinage et/ou un actionneur de direction, en fonction de la trajectoire planifiée.

13. Procédé selon l'une quelconque des revendications précédentes, où :
la planification de la trajectoire est exécutée par un planificateur de trajectoire (12) du véhicule automobile (10) et le planificateur de trajectoire (12) fait en outre fonctionner directement la transmission du véhicule automobile (10) et/ou une instruction de changement de rapport pour la transmission (24) est générée et amenée directement par le planificateur de trajectoire (12).

14. Véhicule automobile automatisé (10), de préférence véhicule utilitaire, **caractérisé par** :
un planificateur de trajectoire (12) qui est réalisé pour planifier une trajectoire du véhicule automobile (10) en fonction d'un temps de changement de rapport (32) d'une transmission (24) du véhicule automobile (10) ; le temps de changement de rapport étant le temps nécessaire à la transmission pour passer d'un rapport initial d'une opération de changement de rapport à un rapport cible de l'opération de changement de rapport ; et
une unité de commande (22) qui est réalisée pour faire fonctionner le véhicule automobile (10) en fonction de la trajectoire planifiée par le planificateur de trajectoire (12).

15. Véhicule automobile automatisé (10) selon la revendication 14, où :
le planificateur de trajectoire (12) et/ou l'unité de commande (22) est réalisé pour exécuter un procédé selon l'une quelconque des revendications 1 à 13.
